# FASCICULE DE BREVET EUROPEEN

(11) **EP 3 256 238 B1**
(45) Date de publication et mention de la délivrance du brevet: **17.03.2021**
(21) Numéro de dépôt: 16707893.0
(22) Date de dépôt: 10.02.2016
(51) Int. Cl.: B01F 3/12, B01F 5/04, B01F 5/10, B01F 5/24, B05B 7/14, A01M 7/00

(54) **MÉLANGEUR POUR ASPIRER ET MÉLANGER UN PRODUIT SOLIDE AVEC UN LIQUIDE PROVENANT D'UNE CUVE DE PULVÉRISATEUR**
MISCHER ZUM ZIEHEN UND MISCHEN EINES FESTEN PRODUKTS MIT EINER FLÜSSIGKEIT AUS EINEM TANK EINES ZERSTÄUBERS
MIXER FOR DRAWING AND MIXING A SOLID PRODUCT WITH A LIQUID FROM A TANK OF A SPRAYER

(30) Priorité: 10.02.2015 FR 1551073
(43) Date de publication de la demande: 20.12.2017
(73) Titulaire: Exel Industries, 75009 Paris (FR)
(72) Inventeur: CHAPRON, Fabien, 69220 Cercie (FR); DARRIEUTORT, Anthony, 01090 Montmerle sur Saone (FR)
(74) Mandataire: Ahner, Philippe
(86) Numéro de dépôt international: PCT/FR2016/050300
(87) Numéro de publication internationale: WO 2016/128677

(56) Documents cités:
- WO-A1-95/03240
- US-A- 3 893 655
- "POWDER & LIQUID DELIVERY SYSTEM Solidliquid", , 15 novembre 2010 (2010-11-15), pages 1-2, XP055182258, Extrait de l'Internet: URL:http://www.hapman.com/images/brochures /brochure-solidquid.pdf [extrait le 2015-04-10]

## Description

L'invention concerne un mélangeur pour aspirer et mélanger et incorporer un produit solide, du type poudreux ou granuleux, avec un liquide provenant d'une cuve d'un pulvérisateur agricole.

Dans le domaine agricole, il est parfois nécessaire de mélanger un produit liquide contenu dans une cuve d'un pulvérisateur, comme de l'eau, avec un produit solide miscible dans l'eau, par exemple un produit phytosanitaire, le mélange obtenu étant destiné à être pulvérisé sur des cultures.

Généralement, le produit solide à incorporer dans la cuve est conditionné dans un sac qui est déversé par l'opérateur directement dans la cuve du pulvérisateur, par le trou d'homme.

Une telle opération est physiquement exigeante et chronophage car elle demande à l'opérateur de monter le sac jusqu'au trou d'homme et de le manipuler pour le déverser dans la cuve.

De plus, cette opération d'incorporation présente un risque de pollution de l'environnement par renversement d'une partie du produit à côté de la cuve, ainsi qu'un risque de contact entre le produit et l'opérateur, par éclaboussure par exemple.

Aussi, on constate que l'opérateur secoue le sac au dessus de la cuve pour déverser les derniers résidus de produit. Ce type de geste risque de favoriser la dispersion du produit dans l'air respiré par l'opérateur

Le document WO-A-95/03240 divulgue un mélangeur selon le préambule de la revendication 1.

La présente invention vise notamment à résoudre ces inconvénients et se rapporte pour ce faire à un mélangeur selon la revendication 1.

Un tel mélangeur selon l'invention permet de limiter les opérations manuelles de l'opérateur en lui permettant d'aspirer directement le produit solide à mélanger depuis le contenant d'origine du produit, grâce à la lance d'aspiration.

De plus, le mélangeur permet d'obtenir un mélange homogène du liquide contenu dans la cuve et du produit solide à incorporer avant son introduction dans ladite cuve.

Selon un exemple de réalisation de l'invention, la buse d'injection du liquide s'étend globalement tangentiellement à l'axe de révolution de la cuvette, de façon à injecter le liquide sur la paroi de la cuvette en imprimant un mouvement de tourbillon audit liquide.

L'écoulement tourbillonnaire du liquide permet de favoriser le mélange du liquide avec le produit solide et surtout le non-colmatage des produits poudreux sur les parois de la cuvette.

Selon une variante de réalisation de l'invention, la buse d'injection du liquide présente une forme globalement annulaire agencée autour de l'axe de la cuvette, de façon à injecter le liquide sur la paroi de la cuvette en imprimant un mouvement axial descendant audit liquide.

Cette caractéristique permet notamment d'empêcher le liquide de remonter dans la lance d'aspiration par l'embout d'évacuation de celle-ci.

De préférence, la cuvette présente une forme globalement tronconique suivant l'axe de révolution de la cuvette, la partie inférieure de la cuvette rétrécissant vers le conduit d'évacuation du circuit hydraulique.

Une telle forme tronconique favorise le mélange du liquide et du produit solide ainsi que l'écoulement et l'évacuation du mélange à l'extrémité inférieure de la cuvette.

Selon l'invention, l'embout d'évacuation de la lance d'aspiration débouche axialement dans le plafond de la cuvette pour injecter le produit dans la cuvette, l'embout d'évacuation faisant saillie par rapport au plafond de la cuvette pour former une lèvre empêchant l'entrée de liquide à l'intérieur de la lance.

De plus, le moyen d'aspiration du liquide comporte une première entrée qui est raccordée sur le conduit d'injection, une sortie qui est raccordée sur la cuve et une seconde entrée d'aspiration qui relie le conduit d'évacuation de la cuvette pour créer une dépression dans la cuvette par effet Venturi.

Aussi, le circuit hydraulique comporte un moyen d'entraînement du liquide contenu dans la cuve, qui est conçu pour entraîner le liquide à travers le circuit hydraulique.

Pour favoriser l'aspiration d'un produit poudreux ou granuleux, l'embout d'aspiration de la lance d'aspiration présente une forme évasée.

Aussi, l'embout d'aspiration de la lance d'aspiration présente d'un coté un bord linéaire formant racloir pour racler le fond d'un contenant, et de l'autre, un bord délimitant des encoches visant à empêcher un contenant souple de se coller à l'embout d'aspiration sous l'effet de l'aspiration.

Selon l'invention, la lance d'aspiration est montée de façon démontable sur la cuvette, et le mélangeur comporte un moyen d'accouplement rapide de l'embout d'évacuation de la lance d'aspiration sur le plafond de la cuvette.

Enfin, le mélangeur comporte un dispositif d'incorporation de produit liquide, qui est relié sur la partie supérieure de la cuvette par un conduit pour permettre l'incorporation d'un produit liquide supplémentaire dans la cuvette sans l'utilisation de la lance d'aspiration.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique d'ensemble qui illustre un mélangeur comportant une cuvette de mélange et une lance d'aspiration du produit solide, selon l'invention ;
- la figure 2 est une vue schématique en coupe de détail, qui illustre une variante de réalisation de la cuvette de la figure 1 ;
- la figure 3 est une vue schématique en coupe de détail, qui illustre le mélangeur de la figure 1 équipé d'une trémie d'incorporation de produit liquide ;
- la figure 4 est une vue schématique en coupe de détail, qui illustre le mélangeur de la figure 1 équipé d'une canne d'aspiration de produit liquide ;
- la figure 5 est une vue schématique en coupe de détail, qui illustre un moyen d'accouplement rapide de l'embout d'évacuation de la lance d'aspiration sur la cuvette, selon l'invention.

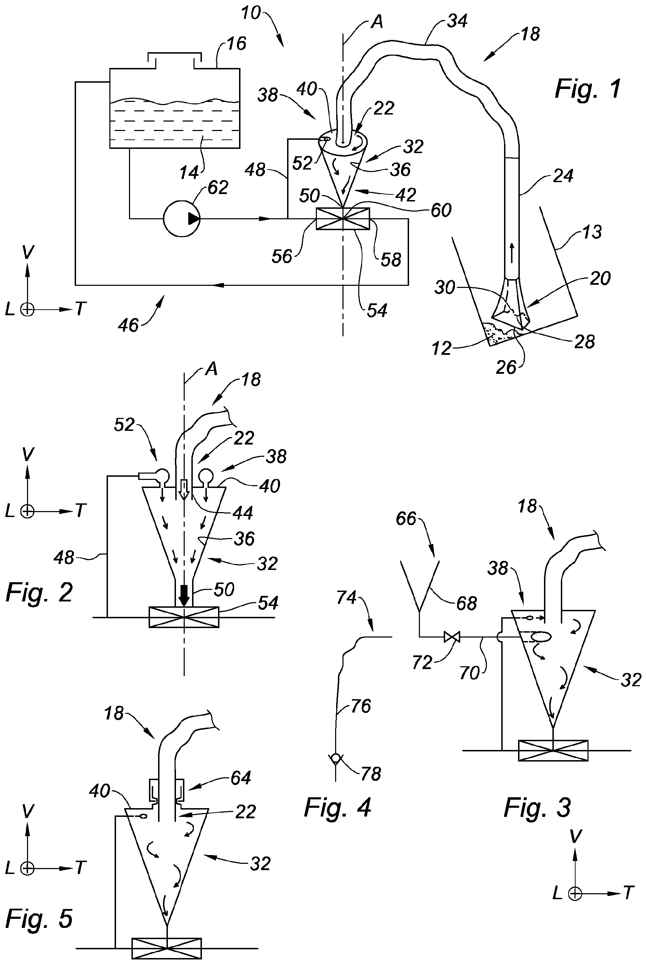

Dans la description et les revendications, on utilisera à titre non limitatif les expressions « supérieur », « inférieur » et leurs dérivés en référence à la partie supérieure et à la partie inférieure respectivement des figures 1 à 5.

De plus, pour clarifier la description et les revendications, on adoptera à titre non limitatif la terminologie longitudinal, vertical et transversal en référence au trièdre L, V, T indiqué aux figures.

A noter que dans la présente demande de brevet, les termes « amont » et «aval » doivent s'entendre par rapport à la circulation des fluides et solides à travers le mélangeur.

Pour les différentes variantes de réalisation, les mêmes références pourront être utilisées pour des éléments identiques ou assurant la même fonction, par souci de simplification de la description.

On a représenté à la figure 1 un mélangeur 10 pour mélanger un produit 12 solide contenu dans un sac 13, avec un liquide 14 provenant d'une cuve 16, par exemple une cuve d'un pulvérisateur agricole, afin d'obtenir un mélange liquide pulvérisable.

On entend par produit 12 solide tous produits du type poudreux, granuleux, en copeaux ou en paillettes. Il peut s'agir notamment d'un engrais miscible dans l'eau.

Le mélangeur 10 comporte une lance 18 d'aspiration qui s'étend depuis un embout d'aspiration 20 adaptée pour aspirer le produit 12, jusqu'à un embout d'évacuation 22 du produit aspiré.

L'embout d'aspiration 20 de la lance 18 est montée à l'extrémité d'un bras 24 de manipulation qui est adapté pour être manipulé par l'opérateur pour aspirer le produit 12 contenu dans le sac 13.

A cet effet, l'embout d'aspiration 20 présente une forme évasée élargie à son extrémité libre pour favoriser l'aspiration du produit 12.

De plus, comme on peut le voir à la figure 1, l'embout d'aspiration 20 présente une extrémité libre de section globalement rectangulaire qui est délimité par un premier bord linéaire formant racloir 26 pour racler le fond du sac 13.

Avantageusement, l'embout d'aspiration 20 présente un second bord linéaire 28 qui délimite des encoches 30 visant à empêcher le sac 13 souple de se coller à l'embout d'aspiration 20 sous l'effet de l'aspiration.

L'embout d'évacuation 22 de la lance 18 est relié sur une cuvette 32 de mélange par un conduit 34 souple qui relie le bras 24 de manipulation de la lance 18.

De préférence, la paroi intérieure du bras 24 et celle du conduit 34 associé sont lisses et sans aspérité, pour favoriser l'aspiration et le non-colmatage du produit 12 lorsque ces parois sont humides.

La cuvette 32 de mélange présente une forme tronconique de révolution suivant un axe A vertical de révolution.

En référence à la figure 1, la cuvette 32 est délimitée par une paroi latérale 36 tronconique évasée vers le haut, la cuvette 32 s'étendant axialement depuis une partie supérieure 38 délimitée par un plafond 40, jusqu'à une partie inférieure 42 de section rétrécie.

Comme on peut le voir à la figure 2, l'embout d'évacuation 22 de la lance 18 d'aspiration débouche axialement dans le plafond 40 de la partie supérieure 38 de la cuvette 32, globalement au centre du plafond 40, pour injecter le produit 12 dans la cuvette 32.

L'embout d'évacuation 22 de la lance 18 fait saillie axialement par rapport au plafond 40 de la cuvette 32, vers l'intérieur de la cuvette 32, pour former une lèvre 44 empêchant l'entrée de liquide à l'intérieur de la lance 18.

Selon un autre aspect, le mélangeur 10 comporte un circuit 46 hydraulique qui est conçu pour faire circuler le liquide 14 entre la cuve 16 et la cuvette 32.

Dans ce but, le circuit 46 comporte un conduit d'injection 48 qui relie la cuve 16 sur la partie supérieure 38 de la cuvette 32 et un conduit d'évacuation 50 qui relie la partie inférieure 42 de la cuvette 32 sur la cuve 16.

Selon un premier exemple de réalisation de l'invention représenté à la figure 1, le conduit d'injection 48 comporte une buse d'injection 52 qui débouche dans la partie supérieure 38 de la cuvette 32 et qui s'étend globalement tangentiellement à l'axe A de révolution de la cuvette 32, de façon à injecter le liquide 14 sur la paroi 36 de la cuvette 32 en générant un mouvement de tourbillon au liquide 14.

Ainsi, sous l'effet combiné de la gravité terrestre et de l'orientation de la buse d'injection 52, le liquide 14 provenant de la cuve 16 tourbillonne contre la paroi 36 de la cuvette 32 en descendant jusqu'à la partie inférieure 42 de la cuvette 32.

Complémentairement, le conduit d'évacuation 50 débouche axialement à l'extrémité inférieure tronconique de la cuvette 32 pour collecter le liquide 14.

De plus, un moyen d'aspiration 54 du liquide est agencé en aval du conduit d'évacuation 50, pour aspirer le liquide 14 et le produit 12 mélangés entre eux à travers la cuvette 32 de mélange.

Le moyen d'aspiration 54, du type Venturi, comporte une première entrée 56 qui est raccordée sur le conduit d'injection 48, une sortie 58 qui est raccordée sur la cuve 16 et une seconde entrée 60 d'aspiration qui relie le conduit d'évacuation 50 de la cuvette 32.

La seconde entrée 60 du moyen d'aspiration 54 créée une dépression par effet venturi, ce qui permet de mettre la cuvette 32 en dépression pour aspirer le mélange contenu dans la cuvette 32 et pour aspirer le produit 12 à travers la lance 18 d'aspiration.

En outre, le circuit 46 hydraulique est équipé d'une pompe 62 qui est agencée sur le conduit d'injection 48, en amont de la cuvette 32, pour entraîner et mettre sous pression le liquide à travers le circuit 46 hydraulique.

Un exemple de fonctionnement du mélangeur 10 est décrit ci-dessous.

Dans un premier temps, la pompe 62 est mise en fonctionnement pour entraîner le liquide dans le circuit 46 hydraulique et pour créer une pression suffisante en amont du moyen d'aspiration 54.

En traversant le moyen d'aspiration 54, le liquide génère une dépression dans la cuvette 32.

Aussi, le liquide 14 provenant de la cuve 16 est injecté dans la cuvette 32 par la buse d'injection 52 prévue à cet effet, le liquide créant un tourbillon et un effet cyclonique dans la cuvette 32.

Après avoir ouvert le sac 13 contenant le produit 12 à incorporer, l'opérateur introduit directement la lance 18 d'aspiration dans le sac 13, la lance 18 aspirant le produit 12 sous l'effet de la dépression engendrée dans la cuvette 32.

Selon la texture du produit 12, il peut être nécessaire de remuer la lance 18 d'aspiration dans le sac pour « fluidifier » le produit 12 pour pouvoir l'aspirer.

Pour aspirer le fond du sac 13, il suffit de pencher le sac manuellement et d'orienter l'embout d'aspiration 20 de la lance 18 dans le coin inférieur du sac 13.

Dans le cas d'un sac 13 en papier, il peut être nécessaire de racler le fond du sac avec le racloir 26 de l'embout d'aspiration 20 afin de laisser le minimum de produit résiduel.

Selon une variante de réalisation de l'invention représentée à la figure 2, la buse d'injection 52 du liquide 14 dans la cuvette 32 présente une forme globalement annulaire qui débouche axialement dans le plafond 40 de la cuvette 32, de façon à injecter le liquide 14 sur la paroi de la cuvette 32 en imprimant un mouvement axial descendant au liquide 14, comme illustré par les flèches sur la figure 2.

La buse d'injection 52 annulaire est centrée suivant l'axe A de révolution de la cuvette 32, de sorte que l'embout d'évacuation 22 de la lance 18 d'aspiration débouche au milieu de la buse d'injection 52.

Cette variante de réalisation permet de ne pas mouiller l'embout d'évacuation 22 de la lance 18 d'aspiration.

Selon une autre variante de réalisation selon l'invention représentée à la figure 5, la lance 18 d'aspiration est montée de façon démontable sur la cuvette 32.

A cet effet, le mélangeur 10 comporte un moyen d'accouplement rapide 64 par coopération de forme de l'embout d'évacuation 22 de la lance 18 d'aspiration sur le plafond 40 de la cuvette 32.

Le moyen d'accouplement rapide 64, qui est par exemple du type à emboitement par coopération de forme, est étanche à l'air pour permettre la mise en dépression de la lance 18 d'aspiration.

Selon un autre exemple de réalisation de l'invention représenté à la figure 3, le mélangeur 10 comporte un dispositif d'incorporation 66 de produit liquide, qui est relié sur la partie supérieure 38 de la cuvette 32 pour permettre l'incorporation d'un produit liquide supplémentaire dans la cuvette 32.

Le dispositif d'incorporation 66 comporte par exemple une trémie 68 d'incorporation, un conduit 70 qui relie la trémie 68 sur la cuvette 32 et une vanne 72 d'arrêt qui est piquée sur le conduit 70.

De plus, le conduit 70 débouche dans la cuvette 32 de façon à perturber le moins possible l'écoulement du liquide 14 provenant de la cuve 16 dans la cuvette 32.

Selon une variante de réalisation de l'invention, le conduit 70 débouche dans la cuvette 32 entre le plafond 40 de la cuvette 32 et le moyen d'accouplement rapide 64, afin de ne pas perturber l'écoulement du liquide 14.

Le dispositif d'incorporation 66 permet d'incorporer un liquide supplémentaire au liquide 14 contenu dans la cuve 16, de façon simultanée ou non avec le produit 12 solide.

A titre non limitatif, le dispositif d'incorporation 66 peut comporter une canne 74 d'incorporation représentée à la figure 4.

La canne 74 relie la cuvette 32 par un tuyau 76 flexible équipé d'un clapet anti-retour 78 et d'une vanne d'arrêt, pour permettre d'aspirer un liquide depuis un conteneur (non représenté), comme un bidon, jusqu'à la cuvette 32.

La présente description de l'invention est donnée à titre d'exemple non limitatif.

## Revendications

1. Mélangeur (10) pour aspirer et mélanger un produit (12) solide, du type poudreux, avec un liquide (14) provenant d'une cuve (16), le mélangeur comportant :
- une lance (18) d'aspiration qui présente un embout d'aspiration (20) adapté pour aspirer ledit produit (12) poudreux et un embout d'évacuation (22) dudit produit (12),
- une cuvette (32) de mélange qui présente une forme de révolution délimitée par une paroi (36) latérale, suivant un axe (A) vertical de révolution, la cuvette (32) s'étendant axialement depuis une partie supérieure (38) délimitée par un plafond (40), jusqu'à une partie inférieure (42), l'embout d'évacuation (22) de la lance (18) d'aspiration débouchant dans la partie supérieure (38) de la cuvette (32) pour injecter le produit (12) dans la cuvette (32),
- un circuit (46) hydraulique conçu pour faire circuler le liquide (14) entre la cuve (16) et la cuvette (32), ledit circuit (46) comportant au moins un conduit d'injection (48) qui comporte au moins une buse d'injection (52) débouchant dans la partie supérieure (38) de la cuvette (32) de sorte que le liquide (14) provenant de la cuve (16) s'écoule sur la paroi (36) latérale de la cuvette (32), et un conduit d'évacuation (50) qui est adapté pour relier la partie inférieure (42) de la cuvette (32) sur la cuve (16), et
- un moyen d'aspiration (54) du liquide qui est agencé en aval de la cuvette (32), pour aspirer le liquide (14) et le produit (12) mélangés entre eux à travers le conduit d'évacuation (50) relié sur la cuvette (32) de mélange,
**caractérisé en ce que** :
- la lance (18) d'aspiration est montée de façon démontable sur la cuvette (32), le mélangeur (10) comportant un moyen d'accouplement rapide (64) par coopération de forme de l'embout d'évacuation (22) de la lance (18) d'aspiration sur le plafond (40) de la cuvette (32),
- l'embout d'évacuation (22) de la lance (18) d'aspiration débouche axialement dans le plafond (40) de la cuvette (32) pour injecter le produit (12) dans la cuvette (32), l'embout d'évacuation (22) faisant saillie par rapport au plafond (40) de la cuvette (32) pour former une lèvre (44) empêchant l'entrée de liquide à l'intérieur de la lance (18) d'aspiration, lorsque la lance (18) d'aspiration est montée sur la cuvette (32).

2. Mélangeur (10) selon la revendication 1, **caractérisé en ce que** la buse d'injection (52) du liquide (14) s'étend globalement tangentiellement à l'axe (A) de révolution de la cuvette (32), de façon à injecter le liquide (14) sur la paroi (36) de la cuvette (32) en imprimant un mouvement de tourbillon audit liquide (14).

3. Mélangeur (10) selon la revendication 1, **caractérisé en ce que** la buse d'injection (52) du liquide (14) présente une forme globalement annulaire agencée autour de l'axe (A) de la cuvette, de façon à injecter le liquide (14) sur la paroi (36) de la cuvette (32) en imprimant un mouvement axial descendant audit liquide.

4. Mélangeur (10) selon l'une quelconque des revendications précédentes, **caractérisé en ce que** la cuvette (32) présente une forme globalement tronconique suivant l'axe (A) de révolution de la cuvette (32), la partie inférieure (42) de la cuvette (32) rétrécissant vers le conduit d'évacuation (50) du circuit (46) hydraulique.

5. Mélangeur (10) selon l'une quelconque des revendications précédentes, **caractérisé en ce que** le moyen d'aspiration (54) du liquide (14) comporte une première entrée (56) qui est raccordée sur le conduit d'injection (48), une sortie (58) qui est raccordée sur la cuve (16) et une seconde entrée (60) d'aspiration qui relie le conduit d'évacuation (50) de la cuvette (32) pour créer une dépression dans la cuvette (32) par effet Venturi.

6. Mélangeur (10) selon l'une quelconque des revendications précédentes, **caractérisé en ce que** le circuit (46) hydraulique comporte un moyen d'entraînement (62) du liquide (14) contenu dans la cuve (16), qui est conçu pour entraîner le liquide (14) à travers le circuit (46) hydraulique.

7. Mélangeur (10) selon l'une quelconque des revendications précédentes, **caractérisé en ce que** l'embout d'aspiration (20) de la lance (18) d'aspiration présente une forme évasée adaptée pour favoriser l'aspiration d'un produit poudreux ou granuleux.

8. Mélangeur (10) selon l'une quelconque des revendications précédentes, **caractérisé en ce que** l'embout d'aspiration (20) de la lance (18) d'aspiration présente d'un côté un bord linéaire formant racloir (26) pour racler le fond d'un contenant (13), et de l'autre, un bord délimitant des encoches (30) visant à empêcher un contenant (13) souple de se coller à l'embout d'aspiration (20) sous l'effet de l'aspiration.

9. Mélangeur (10) selon l'une quelconque des revendications précédentes, **caractérisé en ce qu'**il comporte un dispositif d'incorporation (66) de produit liquide, qui est relié sur la partie supérieure (38) de la cuvette (32) par un conduit (70) pour permettre l'incorporation d'un produit liquide supplémentaire dans la cuvette (32).

## Patentansprüche

1. Mischer (10) zum Ansaugen und Mischen eines festen Produkts (12) vom pulverförmigen Typ mit einer Flüssigkeit (14), die aus einem Tank (16) stammt, wobei der Mischer umfasst:
- ein Ansaugrohr (18), das einen Ansaugstutzen (20) aufweist, der dazu ausgelegt ist, das pulverförmige Produkt (12) anzusaugen, und einen Stutzen (22) zur Abführung des Produkts (12),
- ein Mischküvette (32), die eine durch eine Seitenwand (36) begrenzte Form einer Umdrehung um eine vertikale Drehachse (A) aufweist, wobei sich die Küvette (32) axial von einem durch eine Decke (40) begrenzten oberen Teil (38) bis zu einem unteren Teil (42) erstreckt, wobei der Abführungsstutzen (22) des Ansaugrohrs (18) in den oberen Teil (38) der Küvette (32) mündet, um das Produkt (12) in die Küvette (32) zu injizieren,
- einen hydraulischen Kreislauf (46), der dazu ausgelegt ist, die Flüssigkeit (14) zwischen dem Tank (16) und der Küvette (32) zirkulieren zu lassen, wobei der Kreislauf (46) wenigstens eine Injektionsleitung (48) umfasst, die wenigstens eine Injektionsdüse (52) umfasst, die in den oberen Teil (38) der Küvette (32) mündet, derart, dass die aus dem Tank (16) stammende Flüssigkeit (14) auf die Seitenwand (36) der Küvette (32) strömt, und eine Abführungsleitung (50), die dazu ausgelegt ist, den unteren Teil (42) der Küvette (32) mit dem Tank (16) zu verbinden, und
- eine Einrichtung (54) zum Ansaugen der Flüssigkeit, die stromabwärts der Küvette (32) angeordnet ist, um die Flüssigkeit (14) und das Produkt (12), die miteinander vermischt sind, durch die Abführungsleitung (50) anzusaugen, die mit der Mischküvette (32) verbunden ist,
**dadurch gekennzeichnet, dass**:
- das Ansaugrohr (18) auf demontierbare Weise an der Küvette (32) montiert ist, wobei der Mischer (10) eine Einrichtung (64) zur schnellen Kopplung durch Formzusammenwirkung des Abführungsstutzens (22) des Ansaugrohrs (18) an der Decke (40) der Küvette (32) umfasst,
- der Abführungsstutzen (22) des Ansaugrohrs (18) axial in die Decke (40) der Küvette (32) mündet, um das Produkt (12) in die Küvette (32) zu injizieren, wobei der Abführungsstutzen (22) bezüglich der Decke (40) der Küvette (32) vorsteht, um eine Lippe (44) zu bilden, um den Eintritt von Flüssigkeit in das Innere des Ansaugrohrs (18) zu verhindern, wenn das Ansaugrohr (18) an der Küvette (32) montiert ist.

2. Mischer (10) nach Anspruch 1, **dadurch gekennzeichnet, dass** die Injektionsdüse (52) für die Flüssigkeit (14) sich im Wesentlichen tangential zur Drehachse (A) der Küvette (32) erstreckt, derart, dass die Flüssigkeit (14) auf die Wand (36) der Küvette (32) injiziert wird, wobei der Flüssigkeit (14) eine Wirbelbewegung aufgeprägt wird.

3. Mischer (10) nach Anspruch 1, **dadurch gekennzeichnet, dass** die Injektionsdüse (52) für die Flüssigkeit (14) eine im Wesentlichen ringartige Form aufweist, die um die Achse (A) der Küvette herum angeordnet ist, derart, dass die Flüssigkeit (14) auf die Wand (36) der Küvette (32) injiziert wird, wobei der Flüssigkeit eine axiale Bewegung nach unten aufgeprägt wird.

4. Mischer (10) nach einem der vorhergehenden Ansprüche, **dadurch gekennzeichnet, dass** die Küvette (32) eine im Wesentlichen kegelstumpfartige Form entlang der Drehachse (A) der Küvette (32) aufweist, wobei sich der untere Teil (42) der Küvette (32) in Richtung der Abführungsleitung (50) des hydraulischen Kreislaufs (46) verengt.

5. Mischer (10) nach einem der vorhergehenden Ansprüche, **dadurch gekennzeichnet, dass** die Ansaugeinrichtung (54) für die Flüssigkeit (14) einen ersten Eingang (56) umfasst, der an die Injektionsleitung (48) angeschlossen ist, einen Ausgang (58), der an den Tank (16) angeschlossen ist, und einen zweiten Ansaugeingang (60), der die Abführungsleitung (50) mit der Küvette (32) verbindet, um einen Unterdruck in der Küvette (32) durch den Venturieffekt zu erzeugen.

6. Mischer (10) nach einem der vorhergehenden Ansprüche, **dadurch gekennzeichnet, dass** der hydraulische Kreislauf (46) eine Einrichtung (62) zum Antreiben der Flüssigkeit (14), die in dem Tank (16) enthalten ist, umfasst, die dazu ausgelegt ist, die Flüssigkeit (14) durch den hydraulischen Kreislauf (46) anzutreiben.

7. Mischer (10) nach einem der vorhergehenden Ansprüche, **dadurch gekennzeichnet, dass** der Ansaugstutzen (20) des Ansaugrohrs (18) eine aufgeweitete Form aufweist, die dazu ausgelegt ist, das Ansaugen eines pulverförmigen oder körnigen Produkts zu begünstigen.

8. Mischer (10) nach einem der vorhergehenden Ansprüche, **dadurch gekennzeichnet, dass** der Ansaugstutzen (20) des Ansaugrohrs (18) auf einer Seite einen geraden Rand aufweist, der eine Rakel (26) bildet, um den Boden eines Behälters (13) zu rakeln, und auf der anderen einen Rand, der Einkerbungen (30) begrenzt, die darauf abzielen, zu verhindern, dass ein flexibler Behälter (13) unter der Einwirkung der Ansaugung am Ansaugstutzen (20) anhaftet.

9. Mischer (10) nach einem der vorhergehenden Ansprüche, **dadurch gekennzeichnet, dass** er eine Vorrichtung (66) zur Beimengung eines flüssigen Produkts umfasst, die mit dem oberen Teil (38) der Küvette (32) durch eine Leitung (70) verbunden ist, um die Beimengung eines zusätzlichen flüssigen Produkts in die Küvette (32) zu ermöglichen.

## Claims

1. Mixer (10) for sucking and mixing a solid product (12), of a powdery type, with a liquid (14) coming from a vat (16), the mixer comprising:
- a suction lance (18) having a suction tip (20) adapted to suck said powdery product (12) and a discharge tip (22) for discharging said product (12),
- a mixing basin (32) defining a shape of revolution delimited by a lateral wall (36), about a vertical axis (A) of revolution, the basin (32) extending axially from an upper portion (38) delimited by a ceiling (40) down to a lower portion (42), the discharge tip (22) of the suction lance (18) opens into the upper portion (38) of the basin (32) to inject the product (12) into the basin (32),
- a hydraulic circuit (46) designed to circulate the liquid (14) between the vat (16) and the basin (32), said circuit (46) including at least one injection conduit (48) having at least one injection nozzle (52) that opens into the upper portion (38) of the basin (32) such that the liquid (14) from the vat (16) flows on the lateral wall (36) of the basin (32), and a discharge conduit (50) that is adapted to link the lower portion (42) of the basin (32) on the vat (16), and
- a liquid suction device (54) which is arranged downstream of the basin (32), for sucking the liquid (14) and the product (12) mixed together through the discharge conduit (50) linked on the mixing basin (32),
**characterized in that**:
- the suction lance (18) is detachably mounted on the basin (32), the mixer (10) including a coupling device (64) for quick coupling by form-fitting of the discharge tip (22) of the suction lance (18) on the ceiling (40) of the basin (32),
- the discharge tip (22) of the suction lance (18) opens axially into the ceiling (40) of the basin (32) so as to inject the product (12) in the basin (32), the discharge tip (22) projecting with respect to the ceiling (40) of the basin (32) so as to form a lip (44) inhibiting the entry of liquid inside the suction lance (18), when the suction lance (18) is mounted on the basin (32).

2. Mixer (10) according to claim 1, wherein the injection nozzle (52) for injecting the liquid (14), extends substantially tangentially to the axis (A) of revolution of the basin (32), so as to inject the liquid (14) on the wall (36) of the basin (32) by imparting a swirl movement to said liquid (14).

3. Mixer (10) according to claim 1, wherein the injection nozzle (52) for injecting the liquid (14), defines a substantially annular shape arranged about the axis (A) of the basin, so as to inject the liquid (14) on the wall (36) of the basin (32) by imparting a descending axial movement to said liquid.

4. Mixer (10) according to any preceding claims, wherein the basin (32) defines a truncated-cone shape about the axis (A) of revolution of the basin (32), the lower portion (42) of the basin (32) tapering towards the discharge conduit (50) of the hydraulic circuit (46).

5. Mixer (10) according to any preceding claims, wherein the suction device (54) for sucking the liquid (14), includes a first inlet (56) connected to the injection conduit (48), an outlet (58) connected to the vat (16) and a second suction inlet (80) that connects the discharge conduit (50) of the basin (32) to create a vacuum in the basin (32) by Venturi effect.

6. Mixer (10) according to any preceding claims, wherein the hydraulic circuit (46) includes a driving device (62) for driving the liquid (14) in the vat (16), which is designed to drive the liquid (14) through the hydraulic circuit (46).

7. Mixer (10) according to any preceding claims, wherein the suction tip (20) of the suction lance (18) defines a flared shape adapted to promote the suction of a powdery or granular product.

8. Mixer (10) according to any preceding claims, wherein the suction tip (20) of the suction lance (18) has, on one side, a linear edge forming a scraper (26) for scraping a bottom of a container (13), and on the other side, an edge delimiting notches (30) to inhibit a flexible container (13) from sticking to the suction tip (20) by a suction effect.

9. Mixer (10) according to any preceding claims, comprising an incorporation device (66) for incorporating a liquid product, which is linked on the upper portion (38) of the basin (32) via a conduit (70) so as to enable the incorporation of an additional liquid product in the basin (32).
